(19) Europäisches Patentamt
European Patent Office
Office européen des brevets

(11) EP 1 384 728 B1

(12) # EUROPÄISCHE PATENTSCHRIFT

(45) Veröffentlichungstag und Bekanntmachung des Hinweises auf die Patenterteilung:
**13.02.2008 Patentblatt 2008/07**

(51) Int Cl.:
***C08F 2/10*** *(2006.01)* ***C08F 2/01*** *(2006.01)*
***B01J 19/20*** *(2006.01)* ***B01J 14/00*** *(2006.01)*

(21) Anmeldenummer: **03022084.2**

(22) Anmeldetag: **10.11.2000**

(54) **Verfahren zur kontinuierlichen Herstellung von vernetzten feinteiligen gelförmigen Polymerisaten**

Method for continuously producing cross-linked fine-particle geleous polymerizates

Procédé de préparation continue de polymerisats geliformes réticulés à fines particules

(84) Benannte Vertragsstaaten:
**AT BE CH CY DE DK ES FI FR GB GR IE IT LI LU MC NL PT SE TR**

(30) Priorität: **20.11.1999 DE 19955861**

(43) Veröffentlichungstag der Anmeldung:
**28.01.2004 Patentblatt 2004/05**

(62) Dokumentnummer(n) der früheren Anmeldung(en) nach Art. 76 EPÜ:
**00974512.6 / 1 237 937**

(73) Patentinhaber: **BASF Aktiengesellschaft**
**67056 Ludwigshafen (DE)**

(72) Erfinder:
- **Heide, Wilfried, Dr.**
  **67251 Freinsheim (DE)**
- **Wickel, Stefan, Dr.**
  **67281 Bissersheim (DE)**
- **Daniel, Thomas, Dr.**
  **67165 Waldsee (DE)**
- **Nilges, Joachim**
  **67071 Ludwigshafen (DE)**
- **Hofmann, Jürgen**
  **67069 Ludwigshafen (DE)**

(56) Entgegenhaltungen:
**EP-A- 0 508 810** **DE-A- 3 432 690**
**DE-A- 19 710 212** **GB-A- 2 177 410**

EP 1 384 728 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft ein Verfahren zur kontinuierlichen Herstellung von vernetzten feinteiligen gelförmigen Polymerisaten.

Aus der DE-OS 34 32 690 ist ein Verfahren zur kontinuierlichen Herstellung von vernetzten Polymerisaten bekannt, bei dem man wasserlösliche Monomere in Gegenwart eines Vernetzers und von Initiatoren in einem Kessel polymerisiert, der mit einer Mehrzahl von parallel zueinander angeordneten rotierenden Rührerwellen ausgerüstet ist, die mit Rührerblättern versehen sind. Die Polymerisation wird kontinuierlich in einem Zweiarm-Typkneter oder beispielsweise in einem Dreischaftkneter durchgeführt. Bei diesem Reaktortyp findet eine starke Rückvermischung statt, so daß die Monomerlösung auf das fein zerteilte wasserhaltige Gelpolymere gegeben wird und die Polymerisation des Monomeren auf der Oberfläche des Polymergels abläuft. Die so herstellbaren feinteiligen Polymerisatgele haben einen relativ hohen Restmonomergehalt.

Die EP-A-223 063 lehrt ein Verfahren zur kontinuierlichen Herstellung von vernetzten feinteiligen gelförmigen Polymerisaten in einem einwelligen zylindrischen Mischer, dessen Mischsegmente eine Förderung der Stoffe vom Anfang zum Ende des zylindrischen Mischers bewirken. Die Polymerisation wird bei einem Druck von 100 bis 800 mbar durchgeführt, was einen hohen apparativen Aufwand bedeutet, um den Druck zu regulieren. Die Monomere müssen über ein Druckhalteventil in den Reaktor dosiert werden, welches leicht zupolymerisiert. Darüberhinaus haben beide Verfahren ein unbefriedigend breites Verweilzeitspektrum und einen oszillierenden Produktaustrag.

Daher war es Aufgabe der vorliegenden Erfindung, ein apparativ einfaches Verfahren mit guter Raum/Zeit-Ausbeute zur Verfügung zu stellen, dessen Produkt ein gleichmäßiges Polymergel mit geringem Restmonomergehalt ist.

Demgemäß wurde ein Verfahren zur kontinuierlichen Herstellung von vernetzten, feinteiligen, gelförmigen Polymerisaten durch Copolymerisieren von

a) wasserlöslichen, monoethylenisch ungesättigten Monomeren,

b) 0,001 bis 5 Mol-% bezogen auf die Monomere (a), mindestens zwei ethylenisch ungesättigte Doppelbindungen enthaltenden Monomeren und

c) 0 bis 20 Mol-% bezogen auf die Monomere (a) wasserunlöslichen monoethylenisch ungesättigten Monomeren

in 20 bis 80 gew.-%iger wäßriger Lösung in Gegenwart von Initiator bei Temperaturen von 0 bis 140°C, wobei man die wäßrige Lösung der Monomeren zusammen mit dem Initiator kontinuierlich einem Mischkneter mit mindestens zwei achsparallel rotierenden Wellen zuführt, wobei sich auf den Wellen mehrere Knet- und Transportelemente befinden, die eine Förderung der am Anfang des Mischkneters zugegebenen Stoffe in axialer Richtung zum Ende des Mischers bewirken, gefunden, bei dem der Anteil der Wärmeabfuhr durch Verdampfung von Wasser aus dem Reaktionsgemisch mindestens 5 % der Reaktionswärme und der Anteil der Wärmeabfuhr durch Produktaustrag mindestens 25 % der Reaktionswärme beträgt und die restliche Wärmeabfuhr über Kühlung der Reaktorwände erfolgt, wobei die Reaktion im Mischkneter unter Inertgas durchgeführt wird, wobei das Inertgas ganz oder teilweise durch chemische Reaktion im Mischkneter erzeugt wird.

Wasserlösliche monoethylenisch ungesättigte Monomere der Gruppe (a) sind beispielsweise ethylenisch ungesättigte $C_3$- bis $C_6$-Carbonsäuren, deren Amide und Ester mit Aminoalkoholen der Formel

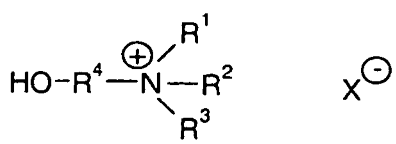

(I)

in der $R^4$ $C_2$ bis $C_5$-Alkylen und $R^1$, $R^2$, $R^3$ unabhängig voneinander Wasserstoff, Methyl, Ethyl oder Propyl bedeuten. Bei diesen Verbindungen handelt es sich beispielsweise um Acrylsäure, Methacrylsäure, Crotonsäure, Itaconsäure, Maleinsäure, Fumarsäure sowie den Alkali- oder Ammoniumsalzen dieser Säuren, Acrylamid, Methacrylamid, Crotonsäureamid, Dimethylaminoethylacrylat, Diethylaminoethylacrylat, Dimethylaminopropylacrylat, Dimethylaminobutylacrylat, Diethylaminoethylmethacrylat, Dimethylaminoethylmethacrylat, Dimethylaminopropylmethacrylat, Dimethylaminoneopentylacrylat und Dimethylaminoneopentylmethacrylat. Die basischen Acrylate und Methacrylate werden in Form der Salze mit starken Mineralsäuren, Sulfonsäuren oder Carbonsäuren oder in quaternisierter Form eingesetzt. Das Anion $X^{\ominus}$ für die Verbindungen der Formel I ist der Säurerest der Mineralsäuren bzw. der Carbonsäuren oder Methosulfat, Ethosulfat oder Halogenid aus einem Quaternierungsmittel.

Weitere wasserlösliche Monomere der Gruppe (a) sind N-Vinylpyrrolidon, Acrylamidopropansulfonsäure,

Vinylphosphonsäure und/oder Alkali- bzw. Ammoniumsalze der Vinylsulfonsäure. Die anderen Säuren können ebenfalls entweder in nicht neutralisierter Form oder in partiell bzw. bis zu 100 % neutralisierter Form bei der Polymerisation eingesetzt werden. Als wasserlösliche Monomere der Gruppe (a) eignen sich auch Diallylammoniumverbindungen, wie Dimethyldiallylammoniumchlorid, Diethyldiallylammoniumchlorid oder Diallylpiperidiniumbromid, N-Vinylimidazoliumverbindungen, wie Salze oder Quaternisierungsprodukte von N-Vinylimidazol und 1-Vinyl-2-methylimidazol, und N-Vinylimidazoline, wie N-Vinylimidazolin, 1-Vinyl-2-methylimidazolin, 1-Vinyl-2-ethylimidazolin oder 1-Vinyl-2-n-propylimidazolin, die ebenfalls in quaternisierter Form oder als Salz bei der Polymerisation eingesetzt werden.

Bevorzugte Monomere der Gruppe (a) sind Acrylsäure, Methacrylsäure sowie die Alkali- oder Ammoniumsalze dieser Säuren, Acrylamid und/oder Methacrylamid. Diese Monomere können in jedem beliebigen Verhältnis miteinander copolymerisiert werden.

Die Polymerisation der Monomere der Gruppe (a) erfolgt in Gegenwart von Vernetzern (Monomere der Gruppe (b)). Die Vernetzer enthalten mindestens zwei ethylenisch ungesättigte Doppelbindungen. Geeignete Vernetzer sind beispielsweise N,N'-Methylenbisacrylamid, Polyethylenglykoldiacrylate und Polyethylenglykoldimethacrylate, die sich jeweils von Polyethylenglykolen eines Molekulargewichts von 126 bis 8500, vorzugsweise 400 bis 2000, ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether von Polyethylenglykolen eines Molekulargewichts von 126 bis 4000, Trimethylolpropandiallylether, Butandioldivinylether, Pentaerythrittriallylether und/oder Divinylethylenharnstoff. Vorzugsweise setzt man wasserlösliche Vernetzer ein, z.B. N,N-Methylenbisacrylamid, Polyethylenglykoldiacrylat, Polyethylenglykoldimethacrylate, Pentaerythrittriallylether und/oder Divinylharnstoff. Die Monomere der Gruppe (b) werden in Mengen von 0,001 bis 5, vorzugsweise 0,005 bis 0,5 Mol-% bezogen auf die Monomere (a) bei der Copolymerisation eingesetzt.

Die Copolymerisation der Monomere der Gruppen (a) und (b) kann - sofern eine Änderung der Eigenschaften der Copolymerisate gewünscht wird - zusätzlich noch in Gegenwart von Monomeren der Gruppe (c) durchgeführt werden. Als Monomere der Gruppe (c) kommen beispielsweise Hydroxyethylacrylat, Hydroxypropylacrylat, Hydroxyethylmethacrylat, Hydroxypropylmethacrylat, Acrylnitril und/oder Methacrylnitril in Betracht. Außerdem eignen sich Ester der Acrylsäure oder Methacrylsäure mit 1 bis 18 Kohlenstoffatome enthaltenden einwertigen Alkoholen, z.B. Methylacrylat, Ethylacrylat, Propylacrylat, Isopropylacrylat, n-Butylacrylat, Isobutylacrylat, Hexylacrylat, 2-Ethylhexylacrylat, Stearylacrylat, die entsprechenden Ester der Methacrylsäure, Fumarsäurediethylester, Maleinsäurediethylester, Maleinsäuredimethylester, Maleinsäuredibutylester, Vinylacetat und Vinylpropionat. Sofern die Monomere der Gruppe (c) zur Modifizierung der wasserlöslichen Polymerisate verwendet werden, setzt man 0,5 bis 20, vorzugsweise 2 bis 10 Mol-% bezogen auf die Monomere (a) ein.

Die wasserunlöslichen Monomere können, falls sie bei der Copolymerisation miteingesetzt werden, mit Hilfe von Emulgatoren in der wäßrigen Lösung fein verteilt werden. Geeignete Emulgatoren sind beispielsweise ethoxylierte Nonylphenole, ethoxyliertes Ricinusöl, Alkylsulfate, Sorbitanfettsäureester, ethoxylierte Sorbite, ethoxylierte Sorbitanfettsäureester und Alkylsulfonate. Die Emulgatoren werden in einer Menge von 0 bis 3 Gew.-% bezogen auf die Monomere (a) eingesetzt.

Die Polymerisation kann gegebenenfalls in Gegenwart der üblichen Polymerisationsregler erfolgen. Geeignete Polymerisationsregler sind beispielsweise Thioverbindungen, wie Thioglykolsäure, Mercaptoalkohole, z.B. 2-Mercaptoethanol, Mercaptopropanol und Mercaptobutanol, Dodecylmercaptan, Ameisensäure, Ammoniak und Amine, z.B. Ethanolamin, Diethanolamin, Triethanolamin, Triethylamin, Morpholin und Piperidin.

Die Monomere (a), (b) und gegebenenfalls (c) werden in 20 bis 80, vorzugsweise 20 bis 50, insbesondere 30 bis 45 gew.-%iger wäßriger Lösung in Gegenwart von Polymerisationsinitiatoren miteinander copolymerisiert. Als Polymerisationsinitiatoren können sämtliche unter den Polymerisationsbedingungen in Radikale zerfallende Verbindungen eingesetzt werden, z.B. Peroxide, Hydroperoxide, Wasserstoffperoxid, Persulfate, Azoverbindungen und die sogenannten Redoxkatalysatoren. Bevorzugt ist der Einsatz von wasserlöslichen Katalysatoren. In manchen Fällen ist es vorteilhaft, Mischungen verschiedener Polymerisationsinitiatoren zu verwenden, z.B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Geeignete organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert.-Butylper-2-ethylhexanoat, tert.-Butylperisononanoat, tert.-Butylpermaleat, tert.-Butylperbenzoat, tert.-Butylper-3,5,5-tri-methylhexanoat und tert.-Amylperneodekanoat. Weitere geeignete Polymerisationsinitiatoren sind Azostarter, z.B. 2,2'-Azobis-(2-amidinopropan)dihydrochlorid, 2,2'-Azobis-(N,N-dimethylen)isobutyramidin-dihydrochlorid, 2-(Carbamoylazo)isobutyronitril und 4,4'-Azobis-(4-cyanovaleriansäure). Die genannten Polymerisationsinitiatoren werden in üblichen Mengen eingesetzt, z.B. in Mengen von 0,01 bis 5, vorzugsweise 0,1 bis 2 Mol%, bezogen auf die zu polymerisierenden Monomere.

Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetall-hydrogensulfit, -sulfit, -thiosulfat, -hyposulfit, -pyrosulfit oder -sulfid, Metallsalze, wie Eisen-II-ionen oder Silberionen oder Natriumhydroxymethylsulfoxylat. Vorzugsweise verwendet man als reduzierende Komponente des Redoxkatalysators Ascorbinsäure oder Natriumpyrosulfit. Bezogen auf die bei der Polymerisation eingesetzte Menge an Monomeren verwendet man $1 \cdot 10^{-5}$ bis 1 Mol.-% der reduzierenden Komponente des Redoxkatalysatorsystems und $1 \cdot 10^{-5}$ bis 5 Mol.-% der oxidierenden Komponente des Redoxkatalysators. Anstelle der oxidierenden Komponente des Redoxkatalysators oder zusätzlich kann man auch einen oder mehrere wasserlösliche Azostarter verwenden.

Bevorzugt wird im erfindungsgemäßen Verfahren ein Redoxsystem bestehend aus Wasserstoffperoxid, Natriumperoxodisulfat und Ascorbinsäure eingesetzt. In einer üblichen Ausführungsform werden diese Komponenten in den Konzentrationen $1 \cdot 10^{-2}$ Mol.-% Wasserstoffperoxid, 0,084 Mol.-% Natriumperoxodisulfat und $2{,}5 \cdot 10^{-3}$ Mol.-% Ascorbinsäure bezogen auf die Monomere eingesetzt.

Die wäßrige Monomerlösung kann den Initiator gelöst oder dispergiert enthalten. Die Initiatoren können jedoch auch getrennt von der Monomerlösung dem Mischkneter zugeführt werden.

Die Monomerlösung wird vor der Polymerisation von Restsauerstoff befreit. Dies geschieht mittels Inertgas, welches im Gleichstrom, Gegenstrom oder dazwischenliegenden Eintrittswinkeln eingeleitet werden kann. Eine gute Durchmischung kann beispielsweise mit Düsen, statischen oder dynamischen Mischern oder Blasensäulen erzielt werden.

Die Monomerlösung wird ebenfalls mit einem Inertgasstrom durch den Reaktor geführt. Bevorzugt beträgt der Massendurchsatz an Monomerlösung mindestens 1000, besonders bevorzugt mindestens 2000 und insbesondere mindestens 3000 $kg/hm^3$ (Reaktorvolumen) und der Inertgasstrom mindestens 100 $l/hm^3$ (Reaktorvolumen).

Als Inertgase können unabhängig voneinander Stickstoff, ein Edelgas wie Argon, Kohlenmonoxid, Kohlendioxid, Schwefelhexafluorid oder Mischungen dieser Gase verwendet werden. Dabei wird das Inertgas ganz oder teilweise durch eine chemische Reaktion im Mischkneter erzeugt. Bevorzugt wird Stickstoff als Inertgas eingesetzt.

Das Reaktorvolumen kann je nach gewünschtem Umsatz variieren. Vorzugsweise beträgt das Reaktorvolumen mindestens 0,1 $m^3$ besonders bevorzugt 0,2 bis 20 $m^3$ und insbesondere 0,2 bis 12 $m^3$.

Während an der Zugabestelle der Monomeren in den Mischer die Stoffe in flüssiger Form vorliegen geht die Konsistenz der Reaktionsmischung über einen hochviskosen Zustand in ein krümeliges Gel über, das durch die kontinuierliche Förderwirkung des Mischers am Ende des Mischers ausgetragen wird. Bei der Polymerisation entsteht ein Gel, das im Mischer zu einem feinteiligen krümeligen Gel zerteilt und als solches dann ausgetragen wird. Wichtig ist dabei, daß während der Polymerisation im Mischer ein Teil des Wasser entfernt wird, so daß am Ende des Mischers krümelige Gelteilchen mit einem Feststoffgehalt von 20 bis 100 Gew.-% anfallen.

Im erfindungsgemäßen Verfahren einsetzbare Mischkneter sind von der Firma List erhältlich und beispielsweise in der CH-A-664 704, EP-A-517 068, WO 97/12666, DE-A-21 23 956, EP-A-603 525, DE-A-195 36 944 und DE-A-4 118 884 beschrieben.

Solche Kneter mit 2 Wellen erzielen durch die Anordnung der Knet- und Transportelemente eine hohe Selbstreinigung, die für eine kontinuierliche Polymerisation eine wichtige Anforderung ist. Vorzugsweise rotieren die beiden Wellen gegenläufig zueinander.

Auf der Rührwelle sind die Scheibensegmente propellerartig angeordnet. Als Knetund Transportelemente sind z.B. wandgängige Mischbarren sowie L- oder U-förmig ausgeformte Aufsätze geeignet.

Der Mischkneter kann nach Bedarf beheizt oder gekühlt werden. Die Monomerlösung wird darin bei einer Temperatur in dem Bereich von 0 bis 140°C und unter Normaldruck polymerisiert. Bevorzugt beträgt die Temperatur 20 bis 120°C und insbesondere 40 bis 120°C. Die maximale Temperatur beträgt bei einer bevorzugten Verfahrensvariante mindestens 70°C, besonders bevorzugt mindestens 80°C und insbesondere mindestens 90°C, die Abgastemperatur mindestens 60°C, besonders bevorzugt mindestens 80°C und insbesondere mindestens 90°C und die Produkttemperatur beim Austrag aus dem Reaktor mindestens 60°C, besonders bevorzugt mindestens 75°C und insbesondere mindestens 85°C.

Bevorzugt wird das erfindungsgemäße Verfahren so durchgeführt, daß der Anteil der Wärmeabfuhr durch Verdampfung von Wasser aus dem Reaktionsgemisch mindestens 15 % und besonders bevorzugt mindestens 25 % der Reaktionswärme beträgt.

Ferner werden Verfahrensvarianten bevorzugt bei denen der Anteil der Wärmeabfuhr durch den Produktaustrag mindestens 45 % und insbesondere mindestens 55 % der Reaktionswärme beträgt.

Bevorzugt werden Verfahren, bei denen die Reaktionswärme zu insgesamt mindestens 50 %, besonders bevorzugt zu mindestens 70 % und insbesondere zu mindestens 90 % durch Produktaustrag und Wasserverdampfung abgeführt wird.

Nach einer ganz besonders bevorzugten Verfahrensvariante findet keine Wärmeabfuhr über die Kühlung der Reaktorwände statt.

Das bei der Polymerisation anfallende Gel hat einen Wassergehalt von 0 bis 80 Gew.-%, bevorzugt von 40 bis 70 Gew.-%. Dieser relativ geringe Feuchtigkeitsgehalt bei bereits rieselfähigem Gel, das nicht verklumpt, senkt die

anschließend zur Trocknung aufzubringende Energie.

Das Herstellverfahren zeichnet sich durch geringe Verweilzeiten im Reaktor und damit eine gute Raum/Zeit Ausbeute aus. So werden selbst bei Verweilzeiten unter 30 Minuten bei einem Reaktorvolumen von 300 l feinteilige gelförmige Polymerisate mit einem sehr geringen Restmonomergehalt gefunden. Dies erspart die sonst aufwendigen Abtrennverfahren und erhöht die Ausbeute. Besonders bevorzugt werden Verfahrensvarianten mit einem hohen Massendurchsatz, der Verweilzeiten unter 20 Minuten und sogar unter 10 Minuten ermöglicht.

Das den Reaktor verlassende Polymergel wird im Anschluß in einem Verweilbehälter bei Temperaturen von 50 bis 120°C vorzugsweise 80 bis 100°C gelagert. Die Verweilzeit beträgt in der Regel 0 bis 3 Stunden, vorzugsweise 5 bis 30 Minuten. Der Behälter kann ein nach oben offener Behälter sein, möglich ist jedoch auch ein verschlossener Behälter, an den ein leichtes Vakuum angelegt wird.

Der Trocknungsschritt kann nach allen bekannten Verfahrensweisen erfolgen, z.B. in einer Wirbelschicht, auf einem Umlufttrocknungsband, Vakuumtrocknungsband oder mit Hilfe einer Mikrowellentrocknung, oder bevorzugt unter vermindertem Druck in einem einwelligen Kneter unter intensivem Durchkneten des Polymergels. Dieser Trocknungsschritt wird vorzugsweise in einem ein- oder mehrwelligen Kneter bei einem Druck von 5 bis 300, vorzugsweise 20 bis 70 mbar und Temperaturen von 30 bis 170 C durchgeführt. Nach dem Trocknen erhält man ein rieselfähiges Polymergel, das eine sehr hohe Wasseraufnahme hat und als Bodenverbesserungsmittel bzw. als Absorptionsmittel in Hygieneartikeln, z.B. Windeln Verwendung finden kann. Die in den Beispielen angegebenen Teile sind Gewichtsteile, die Angaben in Prozent beziehen sich auf das Gewicht der Stoffe.

Beschreibung der Testmethoden:

Zentrifugenretentionskapazität CRC:

Zu Bestimmung der CRC wurden 0,2 g hydrogel-formendes Polymer (Kornfraktion 106 - 850 µm) in einem 60 x 85 mm großen Teebeutel eingewogen, der anschließend verschweißt wurde. Der Teebeutel wurde dann in einen Überschuß von 0,9 gew.-%iger Kochsalzlösung gegeben (mindestens 0,83 l Kochsalz-Lösung / 1 g hydrogel-formendes Polymer). Nach 30 Minuten Quellzeit wurde der Teebeutel aus der Kochsalz-Lösung genommen und bei 250 G drei Minuten zentrifugiert. Durch Wägung des zentrifugierten Teebeutels wurde die von dem hydrogel-formenden Polymer festgehaltene Flüssigkeitsmenge ermittelt.

Absorption unter Gewichtsbelastung AUL 0,7 psi (4826,5 Pa)

Die Meßzelle zur Bestimmung der AUL 0,7 psi (4826,5 Pa) ist ein Plexiglas-Zylinder mit einem Innendurchmesser von 60 mm und einer Höhe von 50 mm, der an der Unterseite einen angeklebten Edelstahl-Siebboden mit einer Maschenweite von 36 µm besitzt. Zu der Meßzelle gehört weiterhin eine Plastikplatte mit einem Durchmesser von 59 mm und ein Gewicht, welches zusammen mit der Plastikplatte in die Meßzelle hineingestellt werden kann. Das Gewicht der Plastikplatte und des Gewichts beträgt zusammen 1345 g. Zur Durchführung der Bestimmung der AUL 0,7 psi (4826,5 Pa) wird das Gewicht des leeren Plexiglas-Zylinders und der Plastikplatte gemessen und als Wo notiert. Dann werden 0,900 ± 0,005 g hydrogel-formendes Polymer (Korngrößenverteilung: 150 - 800 µm) in den Plexiglas-Zylinder eingewogen und möglichst gleichmäßig auf dem Edelstahl-Siebboden verteilt. Anschließend wird die Plexiglasplatte vorsichtig in den Plexiglaszylinder hineingelegt, die gesamte Einheit gewogen und das Gewicht als $W_a$ notiert. Nun wird das Gewicht auf die Plastikplatte in dem Plexiglas-Zylinder gestellt. In die Mitte einer Petrischale mit einem Durchmesser von 200 mm und einer Höhe von 30 mm wird eine keramische Filterplatte mit einem Durchmesser von 120 mm und der Porosität 0 gelegt und soviel 0,9 gew.-%ige Natriumchlorid-Lösung eingefüllt, daß die Flüssigkeitsoberfläche mit der Filterplattenoberfläche abschließt, ohne das die Oberfläche der Filterplatte bedeckt wird. Anschließend wird ein rundes Filterpapier mit einem Durchmesser von 90 mm und einer Porengröße <20 µm (Schwarzband 589 von Schleicher & Schüll) auf die keramische Filterplatte gelegt. Der hydrogel-formendes Polymer enthaltende Plexiglaszylinder wird mit Plastikplatte und Gewicht nun auf das Filterpapier gestellt und dort für 60 Minuten belassen. Nach dieser Zeit wird die komplette Einheit aus der Petrischale vom Filterpapier herausgenommen und anschließend das Gewicht aus dem Plexiglaszylinder entfernt. Der gequollenes Hydrogel enthaltende Plexiglaszylinder wird zusammen mit der Plastikplatte ausgewogen und das Gewicht als $W_b$ notiert. Die AUL 0,7 psi (4826,5 Pa) berechnet sich gemäß:

$$\text{AUL 0,7 psi} = [W_b - W_a] / [W_a - W_O]$$

Die nachfolgenden Beispiele sollen die Erfindung näher erläutern.

Beispiel 1 (nicht erfindungsgemäß)

Zusammensetzung der eingesetzten Reaktionslösung:

40 Gew.-% Monomer, vor der Polymerisation bestehend aus Acrylsäure und Natriumacrylat mit einem Neutralisationsgrad der Acrylsäure von 77 mol-%. Es wurde Acrylsäure neutralisiert (Spezifikation: mind. 99,5 Gew.-% Acrylsäure, max. 0,1 Gew.-% Wasser, max. 500 ppm Diacrylsäure, 180-200 ppm Monomethylhydrochinonether, < 2000 ppm Essigsäure, < 600 ppm Propionsäure). Nach der Neutralisation wurde die Mischung maximal 6 Stunden gelagert ehe sie zur Polymerisation eingesetzt wurde. Zur Initiierung der radikalischen Polymerisation wurde folgendes System verwendet: 0,005 Gew.-% Wasserstoffperoxid und 0,006 Gew.-% Ascorbinsäure und 0,28 Gew.-% Natriumperoxodisulfat, wobei alle Mengenangaben auf die in der Reaktionslösung vorhandenen Monomere - ausgedrückt als Acrylsäure - bezogen sind. Als mehrfach ethylenisch ungesättigter Vernetzer wurde Polyethylenglykol-400-diacrylat (Cray Valley) in einer Einsatzmenge von 0,45 Gew.-% bezogen auf die in der Reaktionslösung vorhandenen Monomere - ausgedrückt als Acrylsäure - verwendet. Der Vernetzer wurde zusammen mit der wäßrigen Monomerlösung gemischt und diese Lösung durch Einleiten von Stickstoff inertisiert.

Die einzelnen Komponenten dieser Reaktionslösung (verdünnte wäßrige Lösungen von Wasserstoffperoxid, Ascorbinsäure, Natriumperoxodisulfat und die Monomer/Vernetzerlösung) wurden getrennt in den Knetreaktor eindosiert und dort während des Einlaufens im Reaktor gemischt, wobei die Polymerisation schon während des Mischens zügig startete.

Es wurden 600 kg/h Reaktionslösung in einen List ORP 250 Contikneter (Fa. List, Arisdorf, Schweiz) eingebracht und das im Kneter durch Polymerisation erzeugte Gel wurde kontinuierlich ausgetragen. Die Temperatur des Kühlwassers im Mantel betrug 40°C bei einem gesamten Kühlwasserdurchsatz durch den Mantel von 12 $m^3$/h. Während der Polymerisation wurden 14 $m^3$/h Stickstoff als Inertgas durch diesen Kneter geführt. Das Reaktionsvolumen betrug 300 l.

Der Reaktor wurde so betrieben, daß 62 % der Reaktionswärme über die Reaktorwand durch die Mantelkühlung abgeführt wurde und 38 % der Reaktionswärme durch das warme Produktgel ausgetragen wurde. Unter diesen Bedingungen fand kein Wärmeaustrag durch Wasserverdampfung statt.

Die Reaktionslösung hatte am Zulauf eine Temperatur von 23,5°C, und das Produktgel besaß am Austrag eine Temperatur von 64,5°C. Es wurden maximale Produkttemperaturen < 80°C im Reaktor gemessen. Die Verweilzeit des Produkts im Reaktor betrug unter 15 min.

Im erhaltenen Produktgel wurde analytisch ein Restacrylsäuregehalt von 1,23 Gew.-% und ein Feststoffgehalt von 41,0 Gew.-% gefunden. Das Gel wurde getrocknet, gemahlen und durch sieben eine Korngrößenfraktion von 100 - 800 μm erhalten. Das getrocknete Polymer besaß eine Zentrifugenretentionskapazität von 38,8 g/g. Der pH-Wert des Polymers betrug 6,1.

Oberflächennachvernetzung:

Anschließend wurden 20 g Polymer (Korngrößenfraktion 100 - 800 μm) in einem Labormischer (Waring-Mischer) mit Mischaufsatz und abgestumpften Mischblättern vorgelegt. Bei eingeschaltetem Mischer und niedriger Umdrehungszahl wurden 1 g Nachvernetzungslösung enthaltend 12 mg Ethylenglykoldiglycidylether gelöst in einer Mischung aus 33 Gew.-% 1,2-Propylenglykol und 67 Gew.-% Wasser zudosiert. Das feuchte Polymerpulver wurde danach dem Mischer entnommen und in einer Petrischale bei 150°C 60 Minuten lang im Umluftschrank getrocknet. Nach Absieben der Grobfraktion (> 800 Mikrometer) wurde das erhaltene Produkt anwendungstechnisch untersucht:

Zentrifugenretentionskapazität, CRC = 32,2 g/g

AUL 0,7 psi: 26,0 g/g.

Beispiel 2

Wie in Beispiel 1 beschrieben, wurden 600 kg/h Reaktionslösung kontinuierlich polymerisiert, jedoch wurde die Temperatur des Kühlwassers im Reaktormantel auf 90°C geregelt und der Kühlmitteldurchfluß wurde auf ca. 6 $m^3$/h gedrosselt. Der Reaktor wurde so betrieben, daß 64 % der Reaktionswärme über den Produktaustrag und 36 % über die Verdampfung des Reaktionswassers abgeführt wurden. Es wurden Reaktionstemperaturen von 96 - 98°C im Reaktor festgestellt. Die Verweilzeit im Reaktor betrug unter 15 Minuten. Es fand keine Wärmeabfuhr über die Reaktorwand statt. Es wurde ein Restmonomerengehalt an Acrylsäure im Produktgel von 0,25 Gew.-% ermittelt bei einem Feststoffgehalt von 43,0 Gew.-%. Die Reaktoreintrittstemperatur der Reaktionslösung betrug 23,2°C, und die Reaktoraustrittstemperatur des erhaltenen Produktgels betrug 93,2°C.

Das erhaltene Gel wurde analog Bsp. 1 getrocknet, gemahlen, gesiebt und oberflächennachvernetzt. Die

anwendungstechnischen Ergebnisse sind Tabelle 1 zu entnehmen. Das getrocknete Polymer hatte vor der Oberflächennachvernetzung eine Zentrifugenretentionskapazität von 37,8 g/g und einen pH-Wert von 6,1.

Beispiel 3

Es wurde ein Versuch analog zu Beispiel 2 durchgeführt, jedoch wurden statt 600 kg/h nur 450 kg/h an Reaktionslösung dem Reaktor zugeführt. Die Verweilzeit im Reaktor betrug nun ca. 20 min.

Es wurde ein Restmonomerengehalt im Produktgel von 0,15 Gew.-% ermittelt bei einem Feststoffgehalt von 43,1 Gew.-%. Die Reaktoreintrittstemperatur der Reaktionslösung betrug 23,4°C, und die Reaktoraustrittstemperatur des erhaltenen Produktgels betrug 91,7°C. Es wurden maximale Reaktionstemperaturen von 95 - 97°C im Reaktor gemessen.

Das erhaltene Gel wurde analog Bsp. 1 getrocknet, gemahlen, gesiebt und oberflächennachvernetzt. Die anwendungstechnischen Ergebnisse sind in Tabelle 2 aufgeführt. Das getrocknete Polymer besaß vor der Oberflächennachvernetzung eine Zentrifugenretentionskapazität von 39,5 g/g und einen pH-Wert von 6,1.

Beispiel 4

Es wurde ein Versuch analog zu Beispiel 2 durchgeführt.

Es wurde gefunden, daß der Restmonomerengehalt des Produktgels 0,30 Gew.-% betrug, während der Feststoffgehalt 42,9 Gew.-% betrug. Die Reaktoreintrittstemperatur der Reaktionslösung betrug 23,4°C, und die Reaktoraustrittstemperatur des erhaltenen Produktgels betrug 93,2°C.

Das erhaltene Gel wurde analog Bsp. 1 getrocknet, gemahlen, gesiebt und oberflächennachvernetzt. Die anwendungstechnischen Ergebnisse sind in Tab. 2 aufgeführt. Das getrocknete Polymer besaß vor der Oberflächennachvernetzung eine Zentrifugenretentionskapazität von 39,4 g/g und einen pH-Wert von 6,1.

Beispiel 5

Es wurde ein Versuch analog zu Beispiel 2 durchgeführt, jedoch wurden diesmal 750 kg/h Reaktionslösung dem Reaktor zugeführt. Die Verweilzeit im Reaktor betrug jetzt nur noch ca. 12 min.

Es wurde ein Restmonomergehalt des Produktgels von 0,25 Gew.-% und ein Feststoffgehalt von 43,0 Gew.-% ermittelt. Die Reaktoreintrittstemperatur der Reaktionslösung betrug 23,4°C, und die Reaktoraustrittstemperatur des erhaltenen Produktgels betrug 94,8°C. Es wurden maximale Produkttemperaturen von 97 - 99°C im Reaktor gemessen.

Das erhaltene Gel wurde analog Bsp. 1 getrocknet, gemahlen, gesiebt und oberflächennachvernetzt. Die anwendungstechnischen Ergebnisse sind in Tabelle 2 aufgeführt. Das getrocknete Polymer besaß vor der Nachvernetzung eine Zentrifugenretentionskapazität von 36,9 g/g und einen pH-Wert von 6,1.

Tabelle 1: Versuche mit und ohne Wärmeabfuhr über die Reaktorwandkühlung

| Bsp. | Kühlwassertemperatur [°C] | $\Delta H_K$ | $\Delta H_V$ | $\Delta H_P$ | Restmonomere Acrylsäure im Gel [Gew.-%] | CRC*) [g/g] | AUL 0,7 psi*) [g/g] |
|---|---|---|---|---|---|---|---|
| 1 | 40 | 62 % | 0 % | 38 % | 1,23 | 32,2 | 26,0 |
| 2 | 90 | 0 % | 36 % | 64 % | 0,25 | 33,7 | 25,6 |

*) diese Angaben beziehen sich auf das nachvernetzte Endprodukt der angegebenen Beispiele
$\Delta H_K$: Reaktionswärmeabfuhr durch den Kühlmantel des Reaktors
$\Delta H_V$: Reaktionswärmeabfuhr durch die Wasserverdampfung aus dem Produktgel
$\Delta H_P$: Reaktionswärmeabfuhr durch Austrag heißen Produktgels

Als gesamte "Reaktionswärme" wird die Summe der eigentlichen Polymerisationswärme und des Wärmeeintrags ins Produkt durch mechanische Rührung angenommen.

Tabelle 2: Versuche ohne Wärmeabfuhr über die Reaktorwandkühlung mit variiertem Eduktdurchsatz

| Bsp. | Durchsatz an Edukt | $\Delta H_K$ | $\Delta H_V$ | $\Delta H_P$ | Restmonomere Acrylsäure im Gel [Gew.-%] | Produktgel austrittstemperatur [°C] | CRC*) [g/g] | AUL 0,7 psi*) [g/g] |
|---|---|---|---|---|---|---|---|---|
| 3 | 450 | 0 % | 40 % | 60 % | 0,15 | 91,7 | 34,1 | 24,8 |
| 4 | 600 | 0% | 37 % | 63 % | 0,30 | 93,2 | 33,7 | 24,8 |
| 5 | 750 | 0 % | 35 % | 65 % | 0,25 | 94,8 | 32,7 | 25,8 |

*) diese Angaben beziehen sich auf das nachvernetzte Endprodukt der angegebenen Beispiele
$\Delta H_K$: Reaktionswärmeabfuhr durch den Kühlmantel des Reaktors
$\Delta H_V$: Reaktionswärmeabfuhr durch die Wasserverdampfung aus dem Produktgel
$\Delta H_P$: Reaktionswärmeabfuhr durch Austrag heißen Produktgels

Die Kühlwassertemperatur betrug bei allen Versuchen 90°C - die Edukteintrittstemperatur lag bei 22 - 24°C.

Als gesamte "Reaktionswärme" wird die Summe der eigentlichen Polymerisationswärme und des Wärmeeintrags ins Produkt durch mechanische Rührung angenommen.

## Patentansprüche

1. Verfahren zur kontinuierlichen Herstellung von vernetzten, feinteiligen, gelförmigen Polymerisaten durch Copolymerisieren von

   a) wasserlöslichen, monoethylenisch ungesättigten Monomeren,
   b) 0,001 bis 5 Mol-% bezogen auf die Monomere (a), mindestens zwei ethylenisch ungesättigte Doppelbindungen enthaltenden Monomeren und
   c) 0 bis 20 Mol-% bezogen auf die Monomere (a) wasserunlöslichen monoethylenisch ungesättigten Monomeren

   in 20 bis 80 gew.-%iger wäßriger Lösung in Gegenwart von Initiator bei Temperaturen von 0 bis 140°C, wobei man die wäßrige Lösung der Monomeren zusammen mit dem Initiator kontinuierlich einem Mischkneter mit mindestens zwei achsparallel rotierenden Wellen zuführt, wobei sich auf den Wellen mehrere Knet- und Transportelemente befinden, die eine Förderung der am Anfang des Mischkneters zugegebenen Stoffe in axialer Richtung zum Ende des Mischers bewirken, **dadurch gekennzeichnet, daß** der Anteil der Wärmeabfuhr durch Verdampfung von Wasser aus dem Reaktionsgemisch mindestens 5 % der Reaktionswärme und der Anteil der Wärmeabfuhr durch Produktaustrag mindestens 25 % der Reaktionswärme beträgt und die restliche Wärmeabfuhr über Kühlung der Reaktorwände erfolgt, sowie die Reaktion im Mischkneter unter Inertgas durchgeführt wird, wobei das Inertgas ganz oder teilweise durch chemische Reaktion im Mischkneter erzeugt wird.

2. Verfahren nach Anspruch 1, **dadurch gekennzeichnet, daß** die Reaktionswärme zu insgesamt mindestens 50 % durch Produktaustrag und Wasserverdampfung abgeführt wird.

3. Verfahren nach Anspruch 1 oder 2, **dadurch gekennzeichnet, daß** der Massendurchsatz an Monomerlösung mindestens 1000 $kg/hm^3$ und der Inertgasstrom mindestens 100 $l/hm^3$ beträgt.

4. Verfahren nach den Ansprüchen 1 bis 3, **dadurch gekennzeichnet, daß** die Monomere a) aus der Gruppe Acrylsäure, Methacrylsäure sowie den Alkali- oder Ammoniumsalzen dieser Säuren, Acrylamid und/oder Methacrylamid sind.

5. Verfahren nach den Ansprüchen 1 bis 4, **dadurch gekennzeichnet, daß** das Reaktorvolumen mindestens 0,10 $m^3$ beträgt.

6. Verfahren nach den Ansprüchen 1 bis 5, **dadurch gekennzeichnet, daß** die Wellen des Mischkneters gegenläufig rotieren.

7. Verfahren nach den Ansprüchen 1 bis 6, **dadurch gekennzeichnet, daß** die maximale Temperatur im Reaktor mindestens 70°C, die Abgastemperatur mindestens 60°C und die Produkttemperatur beim Austrag aus dem Reaktor

mindestens 60°C beträgt.

8. Verfahren nach den Ansprüchen 1 bis 7, **dadurch gekennzeichnet, daß** man als Inertgas Stickstoff, ein Edelgas, Kohlenmonoxid, Kohlendioxid, Schwefelhexafluorid oder Mischungen dieser Gase einsetzt.

9. Verfahren nach den Ansprüchen 1 bis 8, **dadurch gekennzeichnet, daß** man das Inertgas ganz durch eine chemische Reaktion im Mischkneter erzeugt.

## Claims

1. A process for continuous production of crosslinked fine particles of polymer gel by copolymerizing

   a) water-soluble monoethylenically unsaturated monomers,
   b) from 0.001 to 5 mol% based on the monomers (a) of monomers containing at least two ethylenically unsaturated double bonds, and
   c) from 0 to 20 mol% based on the monomers (a) of water-insoluble monoethylenically unsaturated monomers

   in from 20 to 80% by weight aqueous solution in the presence of an initiator at from 0 to 140°C by feeding the aqueous solution of the monomers together with the initiator continuously into a mixing kneader having at least two axially parallel rotating shafts equipped with a plurality of kneading and transporting elements which convey the substances introduced at the upstream end of the mixing kneader in the axial direction toward the downstream end of the mixer, which comprises the fraction of heat being removed by evaporation of water from the reaction mixture being not less than 5% of the heat of reaction and the fraction of heat being removed by product discharge being not less than 25% of the heat of reaction and the rest of the heat being removed via cooling of the reactor walls, and the reaction ni the mixing kneader is carried out under inert gas, the inert gas being wholly or partly generated by chemical reaction in the mixing kneader.

2. A process as claimed in claim 1, wherein in total not less than 50% of the heat of reaction is removed by product discharge and water evaporation.

3. A process as claimed in claim 1 or 2, wherein the mass throughput in terms of monomer solution is not less than 1000 $kg/hm^3$ and the inert gas flow is not less than 100 $1/hm^3$.

4. A process as claimed in any of claims 1 to 3, wherein the monomers a) are selected from the group consisting of acrylic acid, methacrylic acid, the alkali metal and ammonium salts of these acids, acrylamide and methacrylamide.

5. A process as claimed in any of claims 1 to 4, wherein the reactor volume is not less than 0.10 $m^3$.

6. A process as claimed in any of claims 1 to 5, wherein the shafts of the mixing kneader contrarotate.

7. A process as claimed in any of claims 1 to 6, wherein the maximum temperature in the reactor is not less than 70°C, the exit gas temperature is not less than 60°C and the product temperature at the point of discharge from the reactor is not less than 60°C.

8. A process as claimed in any of claims 1 to 7, wherein the inert gas used is nitrogen, a noble gas, carbon monoxide, carbon dioxide, sulfur hexafluoride or a mixture thereof.

9. A process as claimed in any of claims 1 to 8, wherein the inert gas is wholly generated by a chemical reaction in the mixing kneader.

## Revendications

1. Procédé pour la préparation continue de polymères réticulés, fins, sous forme de gel, par copolymérisation de :

   a) monomères monoéthyléniquement insaturés solubles dans l'eau,
   b) 0,001 à 5 % en moles, par rapport aux monomères a), de monomères contenant au moins deux liaisons

doubles éthyléniquement insaturés, et

c) 0 à 20 % en moles, par rapport aux monomères a), de monomères monoéthyléniquement insaturés insolubles dans l'eau

dans une solution aqueuse entre 20 et 80 % en poids, en présence d'initiateur et à des températures de 0 à 140°C, dans lequel la solution aqueuse des monomères est amenée en commun avec l'initiateur de manière continue à un malaxeur-mélangeur comportant au moins deux arbres tournant selon des axes parallèles, plusieurs éléments de malaxage et de transport se trouvant sur les arbres et occasionnant un transport des substances ajoutées à l'entrée du malaxeur-mélangeur dans une direction axiale vers l'extrémité du mélangeur, **caractérisé en ce que** la part de la dissipation de chaleur par évaporation de l'eau du mélange réactionnel est d'au moins 5 % de la chaleur réactionnelle et la part de la dissipation de chaleur par vidange de produit est d'au moins 25 % de la chaleur réactionnelle, la dissipation résiduelle de chaleur a lieu par refroidissement des parois de réacteur, et la réaction est mise en oeuvre dans le malaxeur-mélangeur sous atmosphère de gaz inerte, le gaz inerte étant produit complètement ou partiellement grâce à une réaction chimique dans le malaxeur-mélangeur.

**2.** Procédé selon la revendication 1, **caractérisé en ce que** la chaleur réactionnelle est dissipée jusqu'à un total d'au moins 50 % grâce à une vidange de produit et une évaporation d'eau.

**3.** Procédé selon la revendication 1 ou 2, **caractérisé en ce que** le débit massique de la solution monomère est d'au moins 1000 kg/$hm^3$ et le courant de gaz inerte est d'au moins 100 l/$hm^3$.

**4.** Procédé selon les revendications 1 à 3, **caractérisé en ce que** les monomères a) proviennent du groupe constitué de l'acide acrylique, de l'acide méthacrylique ainsi que des sels alcalins ou d'ammonium de ces acides, de l'acrylamide et/ou du méthacrylamide.

**5.** Procédé selon les revendications 1 à 4, **caractérisé en ce que** le volume du réacteur est d'au moins 0,10 $m^3$.

**6.** Procédé selon les revendications 1 à 5, **caractérisé en ce que** les arbres du malaxeur-mélangeur tournent en sens opposé.

**7.** Procédé selon les revendications 1 à 6, **caractérisé en ce que** la température maximale dans le réacteur est d'au moins 70°C, la température des gaz d'échappement est d'au moins 60°C et la température de produit pour la vidange du réacteur est d'au moins 60°C.

**8.** Procédé selon les revendications 1 à 7, **caractérisé en ce que** de l'azote, un gaz rare, du monoxyde de carbone, du dioxyde de carbone, de l'hexafluorure de soufre ou des mélanges de ces gaz sont utilisés en tant que gaz inerte.

**9.** Procédé selon les revendications 1 à 8, **caractérisé en ce que** le gaz inerte est produit intégralement grâce à une réaction chimique dans le malaxeur-mélangeur.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3432690 A
- EP 223063 A
- CH 664704 A
- EP 517068 A
- WO 9712666 A
- DE 2123956 A
- EP 603525 A
- DE 19536944 A
- DE 4118884 A